# EUROPÄISCHE PATENTSCHRIFT

(11) **EP 2 675 675 B1**
(45) Veröffentlichungstag und Bekanntmachung des Hinweises auf die Patenterteilung: **10.06.2015**
(21) Anmeldenummer: 12704773.6
(22) Anmeldetag: 15.02.2012
(51) Int. Cl.: B60T 13/66, B60T 13/68, B60T 17/00, B60T 17/02

(54) **DRUCKLUFTVERSORGUNGSEINRICHTUNG FÜR EIN NUTZFAHRZEUG UND VERFAHREN ZUM BETREIBEN EINER DRUCKLUFTVERSORGUNGSEINRICHTUNG**
COMPRESSED-AIR SUPPLY DEVICE FOR A UTILITY VEHICLE AND METHOD FOR OPERATING A COMPRESSED-AIR SUPPLY DEVICE
DISPOSITIF D'ALIMENTATION EN AIR COMPRIMÉ POUR VÉHICULE UTILITAIRE ET PROCÉDÉ DE FONCTIONNEMENT D'UN DISPOSITIF D'ALIMENTATION EN AIR COMPRIMÉ

(30) Priorität: 17.02.2011 DE 102011011630
(43) Veröffentlichungstag der Anmeldung: 25.12.2013
(73) Patentinhaber: KNORR-BREMSE Systeme für Nutzfahrzeuge GmbH, 80809 München (DE)
(72) Erfinder: KAUPERT, Oliver, 80995 München (DE)
(86) Internationale Anmeldenummer: PCT/EP2012/052587
(87) Internationale Veröffentlichungsnummer: WO 2012/110555

(56) Entgegenhaltungen:
- EP-A2- 1 964 743
- EP-A2- 2 140 926
- DE-A1-102007 013 671
- DE-A1-102007 013 672
- DE-B4-102007 009 767

## Beschreibung

Die Erfindung betrifft eine Druckluftversorgungseinrichtung für ein Nutzfahrzeug sowie ein Verfahren zum Betreiben einer Druckluftversorgungseinrichtung

Druckluftversorgungseinrichtungen erfüllen in Nutzfahrzeugen zahlreiche Aufgaben. Hierzu gehören insbesondere die Versorgung der Bremsanlage und weiterer Druckluftverbraucher mit trockener gereinigter Druckluft, die Wahrnehmung einer Mehrkreisschutzventilfunktion zur Absicherung verschiedener Verbraucherkreise gegeneinander und zur Sicherstellung einer bestimmten Füllreihenfolge sowie die Bereitstellung einer Druckreglerfunktion. Die von den Druckluftverbrauchern genutzte Druckluft wird primär durch einen Kompressor zur Verfügung gestellt, der im Allgemeinen durch den Verbrennungsmotor des Nutzfahrzeugs angetrieben wird. Bei zahlreichen Systemen lässt sich der Kompressor in einen energiesparenden Zustand überführen, entweder durch Trennen einer Kupplung, über die der Kompressor mit dem Verbrennungsmotor gekoppelt sein kann, oder durch pneumatische Ansteuerung eines Kompressorsteuereingangs, um den Kompressor in einen Leerlaufzustand zu überführen. Derartige energiesparende Maßnahmen können noch dadurch unterstützt werden, dass die Betriebsabläufe in der Druckluftversorgungseinrichtung möglichst so stattfinden, dass einmal erzeugte Druckluft nicht unnötig verloren geht. Dabei ist zu beachten, dass ein gewisser Druckluftverlust unumgänglich ist, denn die Filtereinheit der Druckluftversorgungseinrichtung muss immer wieder regeneriert werden. Zu diesem Zweck wird trockene Druckluft aus den an die Druckluftversorgungseinrichtungen angeschlossenen Druckluftbehältern in einer Richtung durch die Filtereinheit geleitet, die der Förderrichtung entgegengesetzt ist. Die durch die Filtereinheit strömende Luft nimmt die Feuchtigkeit in der Filtereinheit zumindest zum Teil auf, um dann über das Ablassventil der Druckluftversorgungseinrichtung ins Freie zu strömen.

Bei bestimmten Systemen des Standes der Technik ist vorgesehen, den Energiesparbetriebszustand an das Öffnen des Ablassventils zu koppeln, das heißt immer dann, wenn der Kompressor in einen energiesparenden Zustand überführt wird, wird auch das Ablassventil geöffnet, so dass es hierdurch zu einem unnötigen Druckverlust in der gesamten Förderleitung vor einem den Verbrauchern zugewandten Rückschlagventil, das stromabwärts der Filtereinheit angeordnet ist, kommt.

Die EP 1 318 936 B1 beschreibt eine Druckluftversorgungseinrichtung, die mit einer Regenerationsfunktion und einem Energiesparausgang zum Überführen eines Kompressors in einen Leerlaufzustand ausgestattet ist. Es sind zwei Magnetventile vorgesehen, die diese Funktionen realisieren. Dabei ist vorgesehen, dass das Öffnen des Regenerationsluftpfades mit dem Öffnen des Ablassventils gekoppelt ist. Auf diese Weise geht die Druckluft aus dem Volumen zwischen dem Ablassventil und einem stromabwärts von der Filtereinheit angeordneten, den Verbrauchern zugewandten Rückschlagventils nur dann verloren, wenn dies aufgrund der geforderten Regeneration unumgänglich ist.

Die DE 10 2007 009 767 B4 beschreibt eine Druckluftversorgungseinrichtung mit einem mit einem Kompressor koppelbaren Drucklufteingang, einer mit dem Drucklufteingang über eine Förderleitung gekoppelten Filtereinheit, einem mit einem Ablassausgang und der Förderleitung gekoppelten Ablassventil, einem mit einem Steuereingang des Kompressors koppelbaren Energiesparsteuerausgang, einer ersten Ventileinrichtung und einer zweiten Ventileinrichtung, wobei durch die Ventileinrichtungen das Ablassventil, der Energiesparsteuerausgang und die Regeneration der Filtereinheit steuerbar sind, wobei durch die erste Ventileinrichtung der Energiesparsteuerausgang und durch die zweite Ventileinrichtung das Ablassventil sowie die Regeneration der Filtereinheit steuerbar sind und dass die zweite Ventileinrichtung von der ersten Ventileinrichtung mit Druckluft versorgbar ist. Indem das Ablassventil nur beim Einleiten der Regenerationsfunktion in seinen geöffneten Zustand überführt wird, kann sichergestellt werden, dass das Druckluftvolumen in der Förderleitung vor dem den Verbrauchern zugewandten Rückschlagventil nur dann verloren geht, wenn dies aufgrund der geforderten Betriebszustände unumgänglich ist. Es kann somit sichergestellt werden, dass beim Betrieb der Druckluftversorgungseinrichtung nur der Druck verloren geht, der für die Realisierung einer Regenerationsfunktion benötigt wird.

Der Erfindung liegt die Aufgabe zugrunde, eine Druckluftversorgungseinrichtung mit veränderter Funktionalität gegenüber dem Stand der Technik zu schaffen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der Druckluftversorgungseinrichtung gemäß DE 10 2007 009 767 B4 dadurch auf, dass die erste Ventileinrichtung in ihrem ersten Schaltzustand bestromt und in ihrem zweiten Schaltzustand stromlos ist.

Nützlicherweise ist vorgesehen, dass die erste Ventileinrichtung ein 3/2-Wegeventil ist, das in einem ersten Schaltzustand den Steuereingang eines an den Energiesparsteuerausgang gekoppelten Kompressors entlüftet sowie einen Versorgungspfad zu der zweiten Ventileinrichtung sperrt und in einem zweiten Schaltzustand den Steuereingang des an den Energiesparsteuerausgang gekoppelten Kompressors belüftet sowie den Versorgungspfad zu der zweiten Ventil freigibt, und dass der Kompressor durch Belüften des Steuereingangs in einen Energiesparzustand überführbar ist. Die zweite Ventileinrichtung wird also nur dann mit Druckluft versorgt, wenn der Kompressor in seinen Energiesparzustand überführt wird. Dies ist sinnvoll, da nur dann die zweite Ventileinrichtung im Hinblick auf die weiteren Funktionen der Druckluftversorgungseinrichtung aktiv werden muss.

Es kann vorgesehen sein, dass die zweite Ventileinrichtung ein 3/2-Wegeventil ist, das in einem ersten Schaltzustand einen Steuereingang des Ablassventils entlüftet sowie einen Regenerationspfad sperrt und in einem zweiten Schaltzustand den Steuereingang des Ablassventils belüftet sowie einen Regenerationspfad freigibt, und dass das Ablassventil durch Belüften des Steuereingangs in einen geöffneten Zustand überführbar ist. Im nicht angesteuerten Zustand ist das Ablassventil somit geschlossen. Ein Öffnen findet nur dann statt, wenn es aufgrund der Regeneration unvermeidlich ist. Indem die zweite Ventileinrichtung ebenso wie die erste Ventileinrichtung als 3/2-Wegeventil ausgestaltet ist, können die Ventileinrichtungen baugleich ausgeführt sein.

Es kann aber auch nützlich sein, dass die zweite Ventileinrichtung ein 2/2-Wegeventil ist, das in einem ersten Schaltzustand einen Steuereingang des Ablassventils entlüftet sowie einen Regenerationspfad sperrt und in einem zweiten Schaltzustand den Steuereingang des Ablassventils belüftet sowie einen Regenerationspfad freigibt, und dass das Ablassventil durch Belüften des Steuereingangs in einen geöffneten Zustand überführbar ist. Im Hinblick auf die Bereitstellung der Funktionen "Öffnen des Regenerationspfades" und "Belüften des Ablassventilsteuereingangs" ist ein 2/2-Wegeventil ausreichend, so dass die erfindungsgemäße Druckluftversorgungseinrichtung im Hinblick auf das vorliegende Regenerations- und Energiesparkonzept insgesamt mit einem 3/2-Wegeventil und einem 2/2-Wegeventil auskommt.

Durch die Bereitstellung von zwei Ventileinrichtungen mit jeweils zwei Schaltzuständen liegen insgesamt vier mögliche, aufgrund der Versorgung der zweiten Ventileinrichtung durch die ersten Ventileinrichtung jedoch nur drei relevante Betriebszustände vor, wobei vorgesehen ist, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein Lastbetriebszustand vorliegt. Der Regenerationspfad ist geschlossen, der Kompressor befindet sich in seiner Lastlaufphase, und das Ablassventil ist geschlossen.

Des Weiteren ist vorgesehen, dass in einem zweiten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Regenerationsbetriebszustand vorliegt. Der Regenerationsluftpfad ist geöffnet, das Ablassventil ist geöffnet, und der Kompressor befindet sich in seiner Leerlaufphase.

Weiterhin ist vorgesehen, dass in einem dritten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Sperrbetriebszustand vorliegt. Der Kompressor befindet sich in seiner Leerlaufphase und der Regenerationsluftpfad, das heißt ein Pfad, der das den Verbraucherkreisen zugewandte auf die Filtereinheit folgende Rückschlagventil umgeht, ist geöffnet. Jedoch ist das Ablassventil geschlossen, so dass ein Abströmen von Luft verhindert wird.

Von besonderem Vorzug ist, dass eine elektronische Steuereinheit vorgesehen ist und dass die Ventileinrichtungen Magnetventile sind. Auf diese Weise können die verschiedenen Betriebszustände der Druckluftversorgungseinrichtung auf der Grundlage intelligenter Berechnungen eingenommen werden, wobei insbesondere zahlreiche das Nutzfahrzeug betreffende Informationen berücksichtigt werden können.

Die Erfindung baut auf dem gattungsgemäßen Verfahren gemäß DE 10 2007 009 767 B4 dadurch auf, dass die erste Ventileinrichtung in ihrem ersten Schaltzustand bestromt und in ihrem zweiten Schaltzustand stromlos ist. Auf diese Weise werden die Vorteile und Besonderheiten der erfindungsgemäßen Druckluftversorgungseinrichtung auch im Rahmen eines Verfahrens umgesetzt. Dies gilt auch für die nachfolgend angegebenen besonders bevorzugten Ausführungsformen des erfindungsgemäßen Verfahrens.

Dieses zeichnet sich besonders dadurch aus, dass die erste Ventileinrichtung ein 3/2-Wegeventil ist.

Weiterhin kann nützlich vorgesehen sein, dass die zweite Ventileinrichtung ein 3/2-Wegeventil ist, das in einem ersten Schaltzustand einen Steuereingang des Ablassventils entlüftet sowie einen Regenerationspfad sperrt und in einem zweiten Schaltzustand den Steuereingang des Ablassventils belüftet sowie einen Regenerationspfad freigibt, und dass das Ablassventil durch Belüften des Steuereingangs in einen geöffneten Zustand überführt wird.

Ebenfalls kann vorgesehen sein, dass die zweite Ventileinrichtung ein 2/2-Wegeventil ist, das in einem ersten Schaltzustand einen Steuereingang des Ablassventils entlüftet sowie einen Regenerationspfad sperrt und in einem zweiten Schaltzustand den Steuereingang des Ablassventils belüftet sowie einen Regenerationspfad freigibt, und dass das Ablassventil durch Belüften des Steuereingangs in einen geöffneten Zustand überführt wird.

Das erfindungsgemäße Verfahren ist in vorteilhafter Weise dadurch weitergebildet, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein Lastbetriebszustand vorliegt.

Weiterhin ist vorgesehen, dass in einem zweiten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Regenerationsbetriebszustand vorliegt.

Es ist bevorzugt, dass in einem dritten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Sperrbetriebszustand vorliegt.

Nützlicherweise ist vorgesehen, dass die Ventileinrichtungen durch eine elektronische Steuereinheit angesteuert werden.

Die Erfindung wird nun mit Bezug auf die begleitenden Zeichnungen anhand besonders bevorzugter Ausführungsformen beispielhaft erläutert.

Es zeigen:
- Figur 1: eine schematische Teildarstellung einer Druckluftversorgungseinrichtung des Standes der Technik gemäß DE 10 2007 009 767 B4;
- Figur 2: einen schematischen Axialschnitt durch eine erste Ausführungsform einer Ventileinrichtung sowie damit in Verbindung stehende Komponenten;
- Figur 3: einen schematischen Axialschnitt durch eine zweite Ausführungsform einer Ventileinrichtung sowie damit in Verbindung stehende Komponenten und
- Figur 4: eine schematische Teildarstellung einer erfindungsgemäßen Druckluftversorgungseinrichtung.

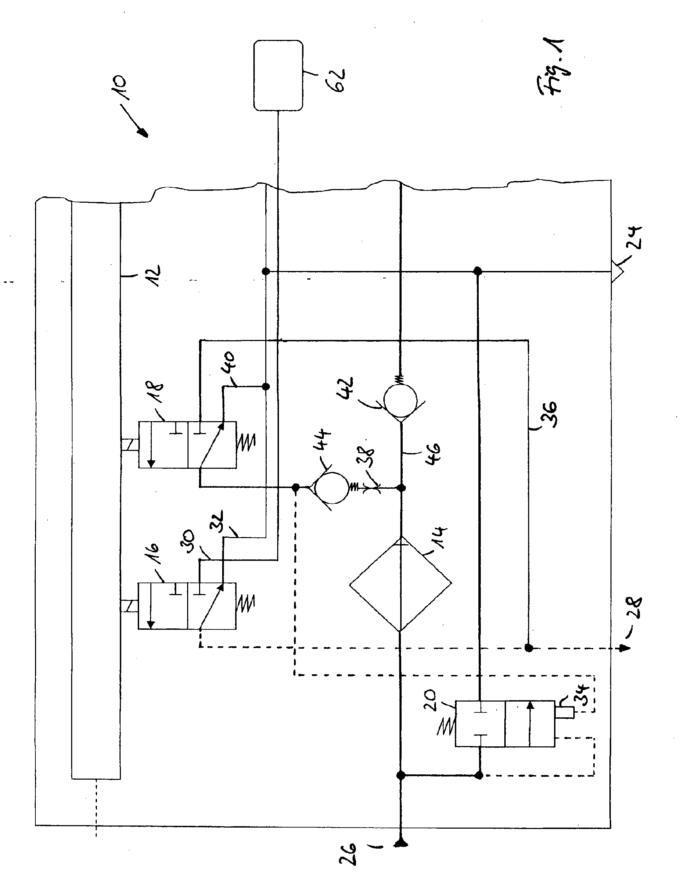

Figur 1 zeigt eine schematische Teildarstellung einer Druckluftversorgungseinrichtung des Standes der Technik gemäß DE 10 2007 009 767 B4. Die Druckluftversorgungseinrichtung 10 enthält eine elektronische Steuereinheit 12. Von der elektronischen Steuereinheit 12 sind zwei 3/2-Wege-Magnetventile 16, 18 ansteuerbar. Weitere Komponenten, beispielsweise eine Heizung, Drucksensoren und weitere Magnetventile, die im Zusammenhang mit der elektronischen Steuereinheit 12 vorgesehen sein können, sind nicht dargestellt. Die Druckluftversorgungseinrichtung hat einen mit einem Kompressor koppelbaren Drucklufteingang 26 und einen Ablassausgang 24. Zwischen dem Drucklufteingang 26 und dem Ablassausgang 24 ist ein Ablassventil 20 angeordnet. Mit dem Drucklufteingang 26 steht weiterhin eine Filtereinheit 14 in Verbindung. Über diese Filtereinheit 14 wird die dem Drucklufteingang 26 zugeführte Druckluft den Verbraucherkreisen zugeleitet, wobei auf diesem Pfad ein Rückschlagventil 42 vorgesehen ist, das ein Rückströmen von Druckluft aus den Verbraucherkreisen verhindert. Stellvertretend für die Verbraucherkreise ist ein Druckluftbehälter 62 dargestellt, wobei die Befüllung des Druckluftbehälters 62 aus der mit dem Rückschlagventil 42 gekoppelten Leitung im Allgemeinen über eine in die Druckluftversorgungseinrichtung eingebundene hier nicht dargestellte Mehrkreisschutzventileinrichtung erfolgt. Die Druckluftversorgungseinrichtung 10 hat weiterhin einen Energiesparsteuerausgang 28, an dem ein Steuereingang des mit dem Drucklufteingang 26 gekoppelten Kompressors angeschlossen werden kann.

Das Magnetventil 16 ist mit einer Leitung 30 verbunden, die zu dem Druckluftbehälter 62 führt und die somit unter normalen Betriebsbedingungen unter Betriebsbremsdruck steht. Eine weitere Leitung 32 ist an das Magnetventil 16 angeschlossen, wobei diese mit dem Ablassausgang 24 verbunden ist. Der dritte Anschluss des Magnetventils 16 steht mit dem Energiesparsteuerausgang 28 und über einen Versorgungspfad 36 mit einem ersten Anschluss des zweiten Magnetventils 18 in Verbindung. Über eine Leitung 40 steht ein zweiter Anschluss des zweiten Magnetventils 18 mit dem Ablassausgang 24 in Verbindung. Der dritte Anschluss des Magnetventils 18 ist über ein Rückschlagventil 44 und eine Drossel 38 mit einem Abschnitt der Förderleitung 46 verbunden, der, bezogen auf die Strömungsrichtung der Druckluft während der Förderphase, stromabwärts der Filtereinheit 14 und stromaufwärts bezüglich des Rückschlagventils 42 angeordnet ist. Weiterhin steht der dritte Anschluss des Magnetventils 18 mit dem Steuereingang 34 des Ablassventils 20 in Verbindung.

Sind die Magnetventile 16, 18 stromlos, so nehmen sie ihren im unteren Teil des Ventilsymbols dargestellten Schaltzustand ein, während die Magnetventile 16, 18 im bestromten Zustand den im oberen Teil des Ventilsymbols dargestellten Schaltzustand realisieren.

Sind beide Magnetventile 16, 18 stromlos, so wird der mit dem Energiesparsteuerausgang 28 gekoppelte Steuereingang des Kompressors über die Leitung 32 und den Ablassausgang 24 entlüftet. Der Regenerationsluftpfad ist "doppelt gesperrt", da einerseits aufgrund der stromlosen Stellung des Magnetventils 16 kein Versorgungsdruck zu Magnetventil 18 geführt wird und da andererseits auch das Magnetventil 18 eine Sperrung des Regenerationsluftpfades bewirkt. Aufgrund der fehlenden Versorgung des Magnetventils 18 über den Versorgungspfad 36 wäre ein Umschalten der zweiten Ventileinrichtung 18 wirkungslos.

Werden beide Magnetventile 16, 18 bestromt, erfolgt eine Belüftung des Steuereingangs des Kompressors über den Energiesparsteuerausgang 28, so dass der Kompressor in seinen Leerlaufzustand überführt wird; dies wird durch das Bestromen der Ventileinrichtung 16 erreicht. Durch Bestromen der Ventileinrichtung 18 wird der Steuereingang 34 des Ablassventils 20 betätigt, so dass das Ablassventil 20 umschaltet. Gleichzeitig wird der Regenerationsluftpfad freigegeben, das heißt eine Verbindung zwischen dem Druckluftbehälter 62 über die erste Ventileinrichtung 16, die zweite Ventileinrichtung 18, das Rückschlagventil 44, die Drossel 38, den Förderleitungsabschnitt 46, die Filtereinheit 14, das Ablassventil 20 und den Ablassausgang 24.

Ist das erste Magnetventil 16 bestromt, während das zweite Magnetventil 18 unbestromt ist, wird zwar der Kompressor durch Belüften seines Steuereingangs über den Energiesparsteuerausgang 28 in einen Leerlaufzustand geschaltet, es erfolgt jedoch keine Regeneration, da der Regenerationsluftpfad durch das Magnetventil 18 und das Ablassventil 20 gesperrt ist. Ein Umschalten des Kompressors in seinen Leerlaufzustand muss also nicht notwendigerweise mit einer Regeneration einhergehen, so dass das bei der Regeneration abströmende Druckluftvolumen nicht verloren geht.

Auf der Grundlage der vorliegenden Erfindung wird somit ein unnötiges Entleeren des Leitungsvolumens zwischen dem Rückschlagventil 42 und dem Ablassventil 20 außerhalb der Regenerationsphasen vermieden.

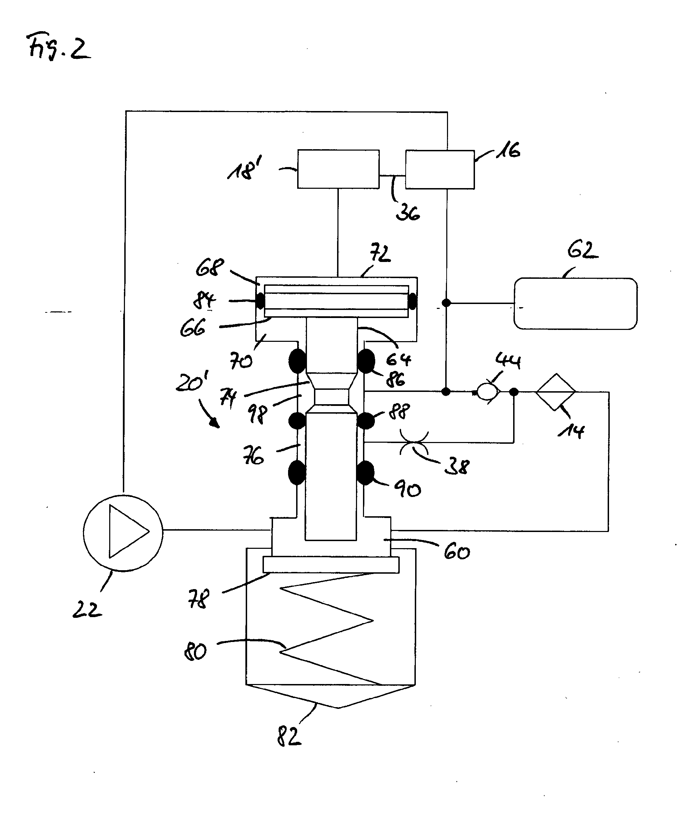

Figur 2 zeigt einen schematischen Axialschnitt durch eine erste Ausführungsform einer Ventileinheit, die im Zusammenhang mit der vorliegenden Erfindung vorteilhaft zum Einsatz kommen kann. Mit dem hier dargestellten Ablassventil 20' lassen sich die Ablassfunktion und die Bereitstellung eines Regenerationsluftpfades in besonderer Weise kombinieren. Im dargestellten Schaltzustand kann eine Förderung von Druckluft von dem Kompressor 22 in das Ablassventil 20' erfolgen. Die so geförderte Druckluft strömt durch eine Ventilkammer 60 des Ablassventils 20' und von dort über die Filtereinheit 14 und das Rückschlagventil 44 zu den Verbrauchern, die hier durch einen Druckluftbehälter 62 symbolisiert sind, wobei selbstverständlich noch eine Mehrkreisschutzventileinrichtung zwischengeschaltet sein kann. Der stromabwärts vom Rückschlagventil 44 vorliegende Systemdruck kann dann von der ersten Ventileinrichtung 16 und der zweiten Ventileinrichtung 18' zur Bereitstellung von Steuerdrücken genutzt werden. Dabei übernimmt die Ventileinrichtung 16 die Versorgung der Ventileinrichtung 18' sowie die Ansteuerung eines an den Kompressor 22 vorgesehenen Steuereingangs 48. Die Ablassventileinheit 20' umfasst einen Steuerkolben. Eine endständige Steuerkolbenplatte 66 trennt einen mit der zweiten elektrisch ansteuerbaren Ventileinrichtung 18' verbundenen Steuerraum 68 mittels einer Dichtung 84, die mit einem Ventilgehäuse 72 zusammenwirkt, von einem Rückraum 70. Der Rückraum 70 enthält eine nicht dargestellte Entlüftungsöffnung, um ein unbehindertes Verschieben des Steuerkolbens 64 zu gestatten. Der Steuerkolben 64 weist weiterhin eine Einschnürung 74 auf, wobei der Steuerkolben auf beiden Seiten der Einschnürung 74 mittels Dichtungen 86, 88 gegen die benachbarten, den Steuerkolben 64 umgebenden Räume abgedichtet ist. Die die Einschnürung 74 umgebende Ventilkammer ist als erste Regenerationsventilkammer 98 somit gegen den Rückraum 70 der Steuerkolbenplatte 66 sowie gegen eine zweite Regenerationsventilkammer 76 abgedichtet. Diese zweite Regenerationsventilkammer 76 ist von der bereits erwähnten Ventilkammer 60 mittels einer weiteren Dichtung 90 getrennt. Die Ventilkammer 60 wird durch einen Ventilteller 78 begrenzt, der durch eine Feder 80 auf einen Ventilsitz gepresst wird. Auf diese Weise dichtet der Ventilteller 78 die Ventilkammer 60 gegen einen Ablass 82 ab. Insgesamt enthält das Ablassventil 20' somit fünf Dichtungen, nämlich den mit dem Ventilteller 78 zusammenwirkenden Ventilsitz sowie die als O-Ringe realisierten Dichtungen 84, 86, 88, 90, die mit dem Ventilgehäuse 72 zusammenwirken und Steuerraum 68, Rückraum 70, erste Regenerationsventilkammer 98, zweite Regenerationsventilkammer 76 und Ventilkammer 60 gegeneinander abdichten. In dem in Figur 2 dargestellten Schaltzustand entlüftet die zweite elektrisch ansteuerbare Ventileinrichtung 18' den Steuerraum 68. Diese Entlüftung erfolgt entweder direkt, wobei dann die Ventileinrichtung 18' nützlicherweise als 3/2-Wegeventil ausgebildet ist, oder es ist möglich, dass die Entlüftung über die Versorgungsleitung 36 und die erste Ventileinrichtung 16 stattfindet. Dann ist es ausreichend, wenn die zweite Ventileinrichtung 18' ein 2/2-Wegeventil ist. Der Ventilteller 78 dichtet die Ventilkammer 60 gegen den Ablass 82 ab, und die Dichtung 88 dichtet den Bereich stromabwärts des Rückschlagventils 44, das heißt die Druckluftverbraucherseite, gegen den mit einer Drossel 38 versehenen Luftpfad zur Filtereinheit 14 ab. Wird die zweite Ventileinrichtung 18' nun bei geöffneter erster Ventileinrichtung 16 angesteuert, so dass der Steuerraum 68 belüftet wird, verschiebt dies den Steuerkolben 64. Das hat zur Folge, dass der Steuerkolben einerseits den Ventilteller 78 von dem Ventilsitz abhebt, so dass die Ventilkammer 60 mit dem Ablass 82 verbunden ist, und dass andererseits der die Einschnürung 74 umgebende Raum nun eine Verbindung zwischen der Verbraucherseite, das heißt im Bereich stromabwärts des Rückschlagventils 44, und der Filtereinheit 14 zur Verfügung stellt. Da der Ablass in diesem Zustand geöffnet ist, kann ein Rückströmen von Druckluft von der Verbraucherseite über die Filtereinheit zum Ablass erfolgen. Das Ablassventil 20' kombiniert insofern die Ablassfunktion mit einer 2/2-Wegeventilfunktion zur Bereitstellung eines Regenerationsluftpfades. Gemäß dem vorliegenden Ausführungsbeispiel ist diese 2/2-Wegeventilfunktion durch eine Einschnürung realisiert.

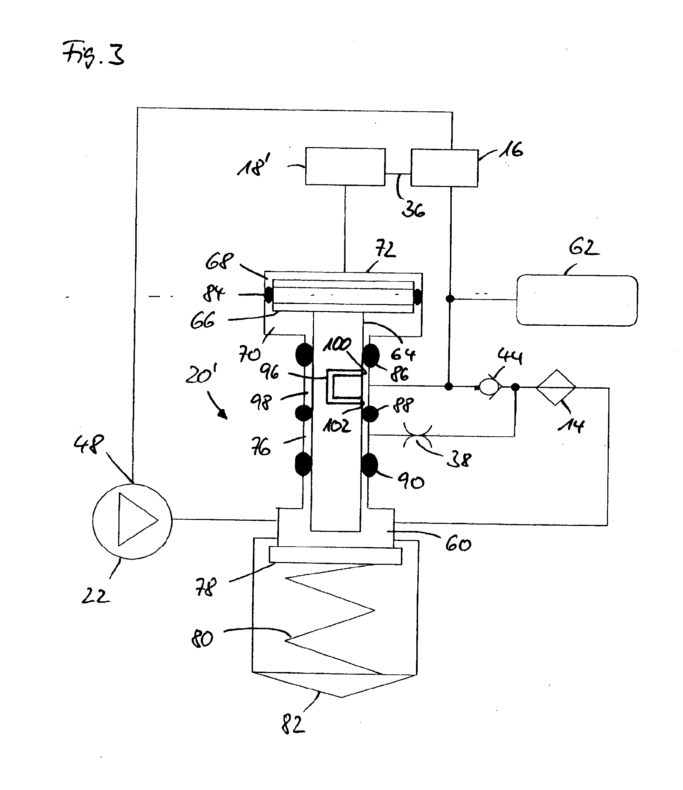

Figur 3 zeigt einen schematischen Axialschnitt durch eine zweite Ausführungsform einer Ventileinrichtung sowie damit in Verbindung stehende Komponenten. Die in Figur 3 dargestellte Ventileinrichtung unterscheidet sich von der in Figur 2 dargestellten Ventileinrichtung dadurch, dass anstelle einer Einschnürung 74 ein Kanal 96 vorgesehen ist. Beide Öffnungen 100, 102 des Kanals 96 liegen im dargestellten Schaltzustand innerhalb der ersten Regenerationsventilkammer 98, während durch Druckbeaufschlagung des Steuerraums 68 der Steuerkolben 64 in der Weise verschoben wird, dass der Kanal 96 beide Regenerationsventilkammern 76, 98 miteinander verbindet, um auf diese Weise einen Regenerationsluftpfad zu vervollständigen.

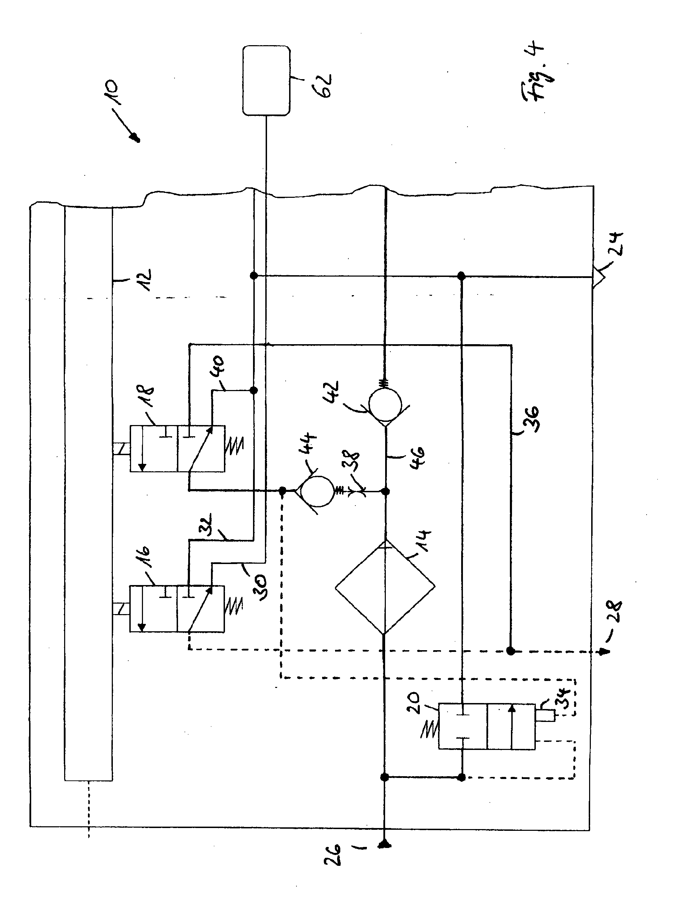

Figur 4 zeigt eine schematische Teildarstellung einer erfindungsgemäßen Druckluftversorgungseinrichtung. Im Vergleich zu der Druckluftversorgungseinrichtung des Standes der Technik gemäß DE 10 2007 009 767 B4 sind hier die Anschlüsse der ersten Ventileinrichtung 16 anders belegt. So ist die Leitung 30 im stromlosen Zustand der Ventileinrichtung 16 mit dem Energiesparsteuerausgang 28 verbunden, der somit unter Druck steht, während die zur Entlüftung 24 führende Leitung 32 geschlossen ist. Um die erfindungsgemäße Druckluftversorgungseinrichtung somit in den Lastzustand mit förderndem Kompressor zu überführen, muss die Ventileinrichtung 16 bestromt werden, während gemäß dem Stand der Technik der Lastzustand bei unbestromter Ventileinrichtung 16 vorlag. Die vorliegende erfindungsgemäße Beschaltung der Ventileinrichtung 16 hat zahlreiche Auswirkungen auf die Schaltlogik des Systems, insbesondere im Hinblick auf die Reaktion des Systems bei Stromausfall.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Druckluftversorgungseinrichtung
- 12: Steuereinheit
- 14: Filtereinheit
- 16: Magnetventil
- 18: Magnetventil
- 18': Ventileinrichtung
- 20: Ablassventil
- 22: Kompressor
- 24: Ablassausgang
- 26: Drucklufteingang
- 28: Energiesparsteuerausgang
- 30: Leitung
- 32: Leitung
- 34: Steuereingang
- 36: Leitung
- 38: Drossel
- 40: Leitung
- 42: Rückschlagventil
- 44: Rückschlagventil
- 46: Förderleitungsabschnitt
- 48: Steuereingang
- 60: Ventilkammer
- 62: Druckluftbehälter
- 64: Steuerkolben
- 66: Steuerkolbenplatte
- 68: Steuerraum
- 70: Rückraum
- 72: Ventilgehäuse
- 74: Einschnürung
- 76: Regenerationsventilkammer
- 78: Ventilteller
- 80: Feder
- 82: Ablass
- 84: Dichtung
- 86: Dichtung
- 88: Dichtung
- 90: Dichtung
- 96: Kanal
- 98: Regenerationsventilkammer
- 100: Öffnung
- 102: Öffnung

## Patentansprüche

1. Druckluftversorgungseinrichtung (10) für ein Nutzfahrzeug mit
- einem mit einem Kompressor (22) koppelbaren Drucklufteingang (26),
- einer mit dem Drucklufteingang (26) über eine Förderleitung gekoppelten Filtereinheit (14),
- einem mit einem Ablassausgang (24) und der Förderleitung gekoppelten Ablassventil (20),
- einem mit einem Steuereingang (48) des Kompressors (22) koppelbaren Energiesparsteuerausgang (28),
- einer ersten Ventileinrichtung (16) und einer zweiten Ventileinrichtung (18, 18'),
wobei durch die Ventileinrichtungen (16, 18) das Ablassventil (20), der Energiesparsteuerausgang (28) und die Regeneration der Filtereinheit (14) steuerbar sind, **dadurch gekennzeichnet dass** durch die erste Ventileinrichtung (16) der Energiesparsteuerausgang (28) und durch die zweite Ventileinrichtung (18, 18') das Ablassventil (20) sowie die Regeneration der Filtereinheit (14) steuerbar sind und dass die zweite Ventileinrichtung (18, 18') von der ersten Ventileinrichtung (16) mit Druckluft versorgbar ist, wobei die erste Ventileinrichtung (16) in einem ersten Schaltzustand den Steuereingang (48) eines an den Energiesparsteuerausgang (28) gekoppelten Kompressors (22) entlüftet sowie einen Versorgungspfad zu der zweiten Ventileinrichtung (18, 18') sperrt und in einem zweiten Schaltzustand den Steuereingang (48) des an den Energiesparsteuerausgang (28) gekoppelten Kompressors (22) belüftet sowie den Versorgungspfad zu der zweiten Ventil (18) freigibt, und dass der Kompressor (22) durch Belüften des Steuereingangs (48) in einen Energiesparzustand überführbar ist, wobei die erste Ventileinrichtung (16) in ihrem ersten Schaltzustand bestromt und in ihrem zweiten Schaltzustand stromlos ist.

2. Druckluftversorgungseinrichtung (10) nach Anspruch 1, **dadurch gekennzeichnet, dass** die erste Ventileinrichtung (16) ein 3/2-Wegeventil ist..

3. Druckluftversorgungseinrichtung (10) nach Anspruch 1 oder 2, **dadurch gekennzeichnet, dass** die zweite Ventileinrichtung ein 3/2-Wegeventil ist, das in einem ersten Schaltzustand einen Steuereingang (34) des Ablassventils (20) entlüftet sowie einen Regenerationspfad sperrt und in einem zweiten Schaltzustand den Steuereingang des Ablassventils belüftet sowie einen Regenerationspfad freigibt, und dass das Ablassventil durch Belüften des Steuereingangs in einen geöffneten Zustand überführbar ist.

4. Druckluftversorgungseinrichtung (10) nach Anspruch 1 oder 2, **dadurch gekennzeichnet, dass** die zweite Ventileinrichtung ein 2/2-Wegeventil ist, das in einem ersten Schaltzustand einen Steuereingang (34) des Ablassventils (20) entlüftet sowie einen Regenerationspfad sperrt und in einem zweiten Schaltzustand den Steuereingang des Ablassventils belüftet sowie einen Regenerationspfad freigibt, und dass das Ablassventil durch Belüften des Steuereingangs in einen geöffneten Zustand überführbar ist.

5. Druckluftversorgungseinrichtung (10) nach Anspruch 3 oder 4, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18, 18') ihren ersten Schaltzustand einnimmt, wodurch ein Lastbetriebszustand vorliegt.

6. Druckluftversorgungseinrichtung (10) nach einem der Ansprüche 3 bis 5, **dadurch gekennzeichnet, dass** in einem zweiten Betriebszustand der Druckluftversorgungseinrichtung die erste Ventileinrichtung (16) ihren zweiten Schaltzustand einnimmt und die zweite Ventileinrichtung (18, 18') ihren zweiten Schaltzustand einnimmt, wodurch ein Regenerationsbetriebszustand vorliegt.

7. Druckluftversorgungseinrichtung (10) nach einem der Ansprüche 3 bis 6, **dadurch gekennzeichnet, dass** in einem dritten Betriebszustand der Druckluftversorgungseinrichtung die erste Ventileinrichtung (16) ihren zweiten Schaltzustand einnimmt und die zweite Ventileinrichtung (18, 18') ihren ersten Schaltzustand einnimmt, wodurch ein Sperrbetriebszustand vorliegt.

8. Druckluftversorgungseinrichtung (10) nach einem der vorhergehenden Ansprüche, **dadurch gekennzeichnet, dass** eine elektronische Steuereinheit (12) vorgesehen ist und dass die Ventileinrichtungen (16, 18) Magnetventile sind.

9. Verfahren zum Betreiben einer Druckluftversorgungseinrichtung (10) mit einem mit einem Kompressor (22) koppelbaren Drucklufteingang (26), einer mit dem Drucklufteingang über eine Förderleitung gekoppelten Filtereinheit (14), einem mit einem Ablassausgang (24) und der Förderleitung gekoppelten Ablassventil (20), einem mit einem Steuereingang (48) des Kompressors (22) koppelbaren Energiesparsteuerausgang (28), einer ersten Ventileinrichtung (16) und einer zweiten Ventileinrichtung (18, 18'), wobei im Rahmen des Verfahrens vorgesehen ist, dass durch die Ventileinrichtungen (16, 18) das Ablassventil (20), der Energiesparsteuerausgang (28) und die Regeneration der Filtereinheit (14) gesteuert werden, **dadurch gekennzeichnet dass** durch die erste Ventileinrichtung (16) der Energiesparsteuerausgang (28) und durch die zweite Ventileinrichtung (18, 18') das Ablassventil (20) sowie die Regeneration der Filtereinheit (14) gesteuert werden und dass die zweite Ventileinrichtung (18, 18') von der ersten Ventileinrichtung (16) mit Druckluft beliefert wird, wobei die erste Ventileinrichtung (16) in einem ersten Schaltzustand den Steuereingang (48) eines an den Energiesparsteuerausgang (28) gekoppelten Kompressors (22) entlüftet sowie einen Versorgungspfad zu der zweiten Ventileinrichtung (18, 18') sperrt und in einem zweiten Schaltzustand den Steuereingang (48) des an den Energiesparsteueralisgang (28) gekoppelten Kompressors (22) belüftet sowie den Versorgungspfad zu der zweiten Ventil (18) freigibt, und dass der Kompressor (22) durch Belüften des Steuereingangs (48) in einen Energiesparzustand überführbar ist, wobei die erste Ventileinrichtung 16 in ihrem ersten Schaltzustand bestromt und in ihrem zweiten Schaltzustand stromlos ist.

10. Verfahren nach Anspruch 9, **dadurch gekennzeichnet, dass** die erste Ventileinrichtung (16) ein 3/2-Wegeventil ist.

11. Verfahren nach Anspruch 9 oder 10, **dadurch gekennzeichnet, dass** die zweite Ventileinrichtung ein 3/2-Wegeventil ist, das in einem ersten Schaltzustand einen Steuereingang (34) des Ablassventils (20) entlüftet sowie einen Regenerationspfad sperrt und in einem zweiten Schaltzustand den Steuereingang des Ablassventils belüftet sowie einen Regenerationspfad freigibt, und dass das Ablassventil durch Belüften des Steuereingangs in einen geöffneten Zustand überführt wird.

12. Verfahren nach Anspruch 9 oder 10, **dadurch gekennzeichnet, dass** die zweite Ventileinrichtung ein 2/2-Wegeventil ist, das in einem ersten Schaltzustand einen Steuereingang (34) des Ablassventils (20) entlüftet sowie einen Regenerationspfad sperrt und in einem zweiten Schaltzustand den Steuereingang des Ablassventils belüftet sowie einen Regenerationspfad freigibt, und dass das Ablassventil durch Belüften des Steuereingangs in einen geöffneten Zustand überführt wird.

13. Verfahren nach Anspruch 11 oder 12, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18, 18') ihren ersten Schaltzustand einnimmt, wodurch ein Lastbetriebszustand vorliegt.

14. Verfahren nach einem der Ansprüche 11 bis 13, **dadurch gekennzeichnet, dass** in einem zweiten Betriebszustand der Druckluftversorgungseinrichtung die erste Ventileinrichtung (16) ihren zweiten Schaltzustand einnimmt und die zweite Ventileinrichtung (18, 18') ihren zweiten Schaltzustand einnimmt, wodurch ein Regenerationsbetriebszustand vorliegt.

15. Verfahren nach einem der Ansprüche 11 bis 14, **dadurch gekennzeichnet, dass** in einem dritten Betriebszustand der Druckluftversorgungseinrichtung die erste Ventileinrichtung (16) ihren zweiten Schaltzustand einnimmt und die zweite Ventileinrichtung (18, 18') ihren ersten Schaltzustand einnimmt, wodurch ein Sperrbetriebszustand vorliegt.

16. Verfahren nach einem der Ansprüche 9 bis 15, **dadurch gekennzeichnet, dass** die Ventileinrichtungen (16, 18) durch eine elektronische Steuereinheit (12) angesteuert werden.

## Claims

1. Compressed-air supply device (10) for a commercial vehicle, comprising
- a compressed air inlet (26) which can be coupled to a compressor (22),
- a filter unit (14) coupled to the compressed air inlet (26) via a delivery line,
- a drain valve (20) coupled to a drain outlet (24) and the delivery line,
- an energy-saving control output (28) which can be coupled to a control input (48) of the compressor (22),
- a first valve device (16) and a second valve device (18, 18'),
wherein the drain valve (20), the energy-saving control output (28) and the regeneration of the filter unit (14) can be controlled by the valve devices (16, 18), **characterised in that** the energy-saving control output (28) can be controlled by the first valve device (16) and the drain valve (20) and the regeneration of the filter unit (14) can be controlled via the second valve device (18, 18'), and **in that** the second valve device (18, 18') can be supplied with compressed air by the first valve device (16), wherein the first valve device (16) vents the control input (48) of a compressor (22) coupled to the energy-saving control output (28) and blocks a supply path to the second valve device (18, 18') in a first switching state and in a second switching state ventilates the control input (48) of the compressor (22) coupled to the energy-saving control output (48) and opens the supply path to the second valve device (18), and **in that** the compressor (22) can be changed into an energy-saving state by ventilating the control input (48), wherein the first valve device (16) is energised in its first switching state and is de-energised in its second switching state.

2. Compressed-air supply device (10) according to claim 1, **characterised in that** the first valve device (16) is a 3/2-way valve.

3. Compressed-air supply device (10) according to claim 1 or 2, **characterised in that** the second valve device is a 3/2-way valve that vents a control input (34) of the drain valve (20) and blocks a regeneration path in a first switching state and in a second switching state ventilates the control input of the drain valve and opens a regeneration path, and **in that** the drain valve can be changed into an opened state by ventilating the control input.

4. Compressed-air supply device (10) according to claim 1 or 2, **characterised in that** the second valve device is a 2/2-way valve that vents a control input (34) of the drain valve (20) and blocks a regeneration path in a first switching state and in a second switching state ventilates the control input of the drain valve and opens a regeneration path, and **in that** the drain valve can be changed into an opened state by ventilating the control input.

5. Compressed-air supply device (10) according to claim 3 or 4, **characterised in that** in a first operating state of the compressed-air supply device the first valve device (16) adopts its first switching state and the second valve device (18, 18') adopts its first switching state, resulting in a load operating state.

6. Compressed-air supply device (10) according to any of claims 3 to 5, **characterised in that** in a second operating state of the compressed-air supply device the first valve device (16) adopts its second switching state and the second valve device (18, 18') adopts its second switching state, resulting in a regeneration operating state.

7. Compressed-air supply device (10) according to any of claims 3 to 6, **characterised in that** in a third operating state of the compressed-air supply device the first valve device (16) adopts its second switching state and the second valve device (18, 18') adopts its first switching state, resulting in a blocking operating state.

8. Compressed-air supply device (10) according to any of the preceding claims, **characterised in that** an electronic control unit (12) is provided, and **in that** the valve devices (16, 18) are solenoid valves.

9. Method for operating a compressed-air supply device (10) comprising a compressed air inlet (26) which can be coupled to a compressor (22), a filter unit (14) coupled to the compressed air inlet (26) via a delivery line, a drain valve (20) coupled to a drain outlet (24) and the delivery line, an energy-saving control output (28) which can be coupled to a control input (48) of the compressor (22), a first valve device (16) and a second valve device (18, 18'), wherein within the framework of the method it is provided that the drain valve (20), the energy-saving control output (28) and the regeneration of the filter unit (14) are controlled by the valve devices (16, 18), **characterised in that** energy-saving control output (28) is controlled by the first valve device (16) and the drain valve (20) and the regeneration of the filter unit (14) are controlled by the second valve device (18, 18'), and **in that** the second valve device (18, 18') is supplied with compressed air by the first valve device (16), wherein the first valve device (16) vents the control input (48) of a compressor (22) coupled to the energy-saving control output (28) and blocks a supply path to the second valve device (18, 18') in a first switching state and in a second switching state ventilates the control input (48) of the compressor (22) coupled to the energy-saving control output (28) and opens the supply path to the second valve device (18), and **in that** the compressor (22) can be changed into an energy-saving state by ventilating the control input (48), wherein the first valve device (16) is energised in its first switching state and is de-energised in its second switching state.

10. Method according to claim 9, **characterised in that** the first valve device (16) is a 3/2-way valve.

11. Method according to claim 9 or 10, **characterised in that** the second valve device is a 3/2-way valve that vents a control input (34) of the drain valve (20) and blocks a regeneration path in a first switching state and in a second switching state ventilates the control input of the drain valve and opens a regeneration path, and **in that** the drain valve can be changed into an opened state by ventilating the control input.

12. Method according to claim 9 or 10, **characterised in that** the second valve device is a 2/2-way valve that vents a control input (34) of the drain valve (20) and blocks a regeneration path in a first switching state and in a second switching state ventilates the control input of the drain valve and opens a regeneration path, and **in that** the drain valve can be changed into an opened state by ventilating the control input.

13. Method according to claim 11 or 12, **characterised in that** in a first operating state of the compressed-air supply device the first valve device (16) adopts its first switching state and the second valve device (18, 18') adopts its first switching state, resulting in a load operating state.

14. Method according to any of claims 11 to 13, **characterised in that** in a second operating state of the compressed-air supply device the first valve device (16) adopts its second switching state and the second valve device (18, 18') adopts its second switching state, resulting in a regeneration operating state.

15. Method according to any of claims 11 to 14, **characterised in that** in a third operating state of the compressed-air supply device the first valve device (16) adopts its second switching state and the second valve device (18, 18') adopts its first switching state, resulting in a blocking operating state.

16. Method according to any of claims 9 to 15, **characterised in that** the valve devices (16, 18) are selected by an electronic control unit (12).

## Revendications

1. Dispositif (10) d'alimentation en air comprimé d'un véhicule utilitaire comprenant
- une entrée (26) d'air comprimé pouvant être reliée à un compresseur (22),
- une unité (14) de filtration reliée à l'entrée (26) d'air comprimé par un conduit de transport,
- une vanne (20) de décharge reliée à une sortie (24) de décharge et au conduit de transport,
- une sortie (28) de commande d'économie d'énergie pouvant être reliée à une entrée (48) de commande du compresseur (22),
- un premier dispositif (16) de vanne et un deuxième dispositif (18, 18') de vanne,
dans lequel la sortie (28) de commande d'économie d'énergie et la régénération de l'unité (14) de filtration peuvent être commandées par les dispositifs (16, 18) de vanne,
**caractérisé en ce que** peuvent être commandés, par le premier dispositif (16) de vanne, la sortie (28) de commande d'économie d'énergie et, par le deuxième dispositif (18, 18') de vanne, la vanne (20) de décharge, ainsi que la régénération de l'unité (14) de filtration et **en ce que** le deuxième dispositif (18, 18') de vanne peut être alimenté en air comprimé par le premier dispositif (16) de vanne, le premier dispositif (16) de vanne purgeant dans un premier état de commutation l'entrée (48) de commande d'un compresseur (22) relié à la sortie (28) de commande d'économie d'énergie, ainsi qu'interrompant un trajet d'alimentation menant au deuxième dispositif (18, 18') de vanne et libérant, dans un deuxième état de commutation, l'entrée (48) de commande du compresseur (22) reliée à la sortie (28) de commande d'économie d'énergie, ainsi que libérant le trajet d'alimentation menant à la deuxième vanne (18) et **en ce que** le compresseur (22) peut, par alimentation en air de l'entrée (48) de commande, passer dans un état d'économie d'énergie, le premier dispositif (16) de vanne étant alimenté en courant dans son premier état de commutation et étant sans courant dans son deuxième état de commutation.

2. Dispositif (10) d'alimentation en air comprimé suivant la revendication 1, **caractérisé en ce que** le premier dispositif (16) de vanne est une vanne à 3/2 voies.

3. Dispositif (10) d'alimentation en air comprimé suivant la revendication 1 ou 2, **caractérisé en ce que** le deuxième dispositif de vanne est une vanne à 3/2 voies qui, dans un premier état de commutation, purge une entrée (34) de commande de la vanne (20) de décharge ainsi qu'interrompt un trajet de régénération et, dans un deuxième état de commutation, alimente en air l'entrée de commande de la vanne de décharge, ainsi que libère un trajet de régénération et **en ce que** la vanne de décharge peut, par alimentation de l'entrée de commande, passer dans un état ouvert.

4. Dispositif (10) d'alimentation en air comprimé suivant la revendication 1 ou 2, **caractérisé en ce que** le deuxième dispositif de vanne est une vanne à 2/2 voies qui purge, dans un premier état de commutation, une entrée (34) de commande de la vanne (20) de décharge, ainsi qui interrompt un trajet de régénération, et dans un deuxième état de commutation, alimente en air l'entrée de commande de la vanne de décharge, ainsi que libère un trajet de régénération et **en ce que** la vanne de décharge peut passer, par alimentation en air de l'entrée de commande, dans un état ouvert.

5. Dispositif (10) d'alimentation en air comprimé suivant la revendication 3 ou 4, **caractérisé en ce que**, dans un premier état de fonctionnement du dispositif d'alimentation en air comprimé, le premier dispositif (16) de vanne prend son premier état de commutation et le deuxième dispositif (18, 18') de vanne prend son premier état de commutation en sorte qu'il y a un état de fonctionnement en charge.

6. Dispositif (10) d'alimentation en air comprimé suivant la revendication 3 à 5, **caractérisé en ce que**, dans un deuxième état de fonctionnement du dispositif d'alimentation en air comprimé, le premier dispositif (16) de vanne prend son deuxième état de commutation et le deuxième dispositif (18, 18') de vanne prend son deuxième état de commutation en sorte qu'il y a un état de fonctionnement de régénération.

7. Dispositif (10) d'alimentation en air comprimé suivant la revendication 3 à 6, **caractérisé en ce que**, dans un troisième état de fonctionnement du dispositif d'alimentation en air comprimé, le premier dispositif (16) de vanne prend son deuxième état de commutation et le deuxième dispositif (18, 18') de vanne prend son premier état de commutation en sorte qu'il y a un état de fonctionnement d'arrêt.

8. Dispositif (10) d'alimentation en air comprimé suivant l'une des revendications précédentes, **caractérisé en ce qu'**il est prévu une unité (12) électronique de commande et **en ce que** les dispositifs (16, 18) de vanne sont des électrovannes.

9. Procédé pour faire fonctionner un dispositif (10) d'alimentation en air comprimé, comprenant une entrée (26) d'air comprimé pouvant être reliée à un compresseur (22), une unité (14) de filtration reliée à l'entrée (26) d'air comprimé par un conduit de transport, une vanne (20) de décharge reliée à une sortie (24) de décharge et au conduit de transport, une sortie (28) de commande d'économie d'énergie pouvant être reliée à une entrée (48) de commande du compresseur (22), un premier dispositif (16) de vanne et un deuxième dispositif (18, 18') de vanne, dans lequel dans le cadre du procédé il est prévu de commander, par les dispositifs (16, 18) de vanne on commande, la vanne (20) de décharge, la vanne (28) de sortie de commande d'économie d'énergie et la régénération de l'unité (14) de filtration, **caractérisé en ce que**, par le premier dispositif (16) de vanne, on commande la sortie (28) de commande d'économie d'énergie et, par le deuxième dispositif (18, 18') de vanne, la vanne (20) de décharge, ainsi que la régénération de l'unité (14) de filtration et **en ce que** l'on alimente le deuxième dispositif (18, 18') de vanne en air comprimé par le premier dispositif (16) de vanne, le premier dispositif (16) de vanne purgeant, dans un premier état de commutation, l'entrée (48) de commande d'un compresseur (22) reliée à la sortie (28) de commande d'économie d'énergie, ainsi qu'interrompant un trajet d'alimentation menant au deuxième dispositif (18, 18') de vanne et, dans un deuxième état de commutation, alimentant en air l'entrée (48) de commande du compresseur (22) reliée à la sortie (28) de commande d'économie d'énergie, ainsi que libérant le trajet d'alimentation menant à la deuxième vanne (18) et **en ce que** le compresseur (22) peut, par alimentation en air de l'entrée (48) de commande, passer dans un état d'économie d'énergie, le premier dispositif (16) de commande étant alimenté en courant dans son premier état de commutation et étant sans courant dans son deuxième état de commutation.

10. Procédé suivant la revendication 9, **caractérisé en ce que** le premier dispositif (16) de vanne est une vanne à 3/2 voies.

11. Procédé suivant la revendication 9 ou 10, **caractérisé en ce que** le deuxième dispositif de vanne est une vanne à 3/2 voies qui, dans un premier état de commutation, purge une entrée (34) de commande de la vanne (20) de décharge, ainsi qu'interrompt un trajet de régénération et, dans un deuxième état de commutation, alimente en air l'entrée de commande de la vanne de décharge, ainsi que libère un trajet de régénération et **en ce que** l'on fait passer la vanne de décharge dans un état ouvert par alimentation en air de l'entrée de commande.

12. Procédé suivant la revendication 9 ou 10, **caractérisé en ce que** le deuxième dispositif de vanne est une vanne à 2/2 voies qui purge, dans un premier état de commutation, une entrée (34) de commande de la vanne (20) de décharge, ainsi qu'interrompt un trajet de régénération et **en ce que** l'on fait passer la vanne de décharge dans un état ouvert par alimentation en air de l'entrée de commande.

13. Procédé suivant la revendication 11 ou 12, **caractérisé en ce que**, dans un premier état de fonctionnement du dispositif d'alimentation en air comprimé, le premier dispositif (16) de vanne prend son premier état de commutation et le deuxième dispositif (18, 18') de vanne prend son premier état de commutation en sorte qu'il y a un état de fonctionnement en charge.

14. Procédé suivant l'une des revendications 11 à 13, **caractérisé en ce que**, dans un deuxième état de fonctionnement du dispositif d'alimentation en air comprimé, le premier dispositif (16) de vanne prend son deuxième état de commutation et le deuxième dispositif (18, 18') de vanne prend son deuxième état de commutation en sorte qu'il y a un état de fonctionnement de régénération.

15. Procédé suivant l'une des revendications 11 à 14, **caractérisé en ce que**, dans un troisième état de fonctionnement du dispositif d'alimentation en air comprimé, le premier dispositif (16) de vanne prend son deuxième état de commutation et le deuxième dispositif (18, 18') de vanne prend son premier état de commutation en sorte qu'il y a un état de fonctionnement d'arrêt.

16. Procédé suivant l'une des revendications 9 à 15, **caractérisé en ce que** l'on commande les dispositifs (16, 18) de vanne par une unité (12) électronique de commande.
